# EUROPEAN PATENT SPECIFICATION

(11) **EP 1 500 805 B1**
(45) Date of publication and mention of the grant of the patent: **22.03.2006**
(21) Application number: 03425421.9
(22) Date of filing: 27.06.2003
(51) Int. Cl.: F02C 9/40, F02C 7/22

(54) **Gas turbine engine with means to facilitate cold start-up and shut-down and method for feeding such an engine with fuel**
Gasturbinentriebwerk mit einem System zur Erleichterung eines Kaltstartes und eines Anhaltens und Verfahren zur Kraftstoffversorgung eines solchen Triebwerks
Moteur à turbine à gaz ayant un système facilitant le démarrage à froid et l'arrêt et méthode d'alimentation en carburant d'un tel moteur

(43) Date of publication of application: 26.01.2005
(73) Proprietor: MAGNETEK S.p.A., 52028 Terranuova Bracciolini (Arezzo) (IT)
(72) Inventor: Milianti, Liviano, 50032 Borgo San Lorenzo (Firenze) (IT)
(74) Representative: Mannucci, Michele

(56) References cited:
- EP-A- 1 008 737
- GB-A- 719 996
- US-A- 3 766 734
- US-A- 3 991 561
- US-A- 4 157 012
- US-A- 4 253 301
- US-A- 4 369 803
- US-A- 4 833 878

## Description

### Technical Field

The present invention relates to a turbine engine unit, namely an engine unit of the type comprising: a gas turbine engine, with a turbine and a compressor; a fuel tank; a pipe to feed fuel from the tank to one or more fuel injection nozzles in at least one combustion chamber of the turbine; a fuel feed control system.

The invention also relates to a method to feed the fuel to a turbine engine.

### State of the Art

Engines with gas turbines of this type are frequently used to produce electrical power, for example in power plants or, with smaller turbines, as generator units, that is units to produce electrical power. The gas turbine produces mechanical energy, a certain percentage of which is used to operate the compressor, while the surplus is used to rotate a voltage generator, with a suitable mechanical reducer interposed.

The turbine is fed with low flammability fuels, typically diesel oil or kerosene. To prevent some drawbacks at the ignition stage, these fuels are provided with specific additives that have the function of promoting combustion even when the combustion chamber of the turbine is cold. During the ignition phase, fuel is fed to the combustion chamber through a start line, which is then gradually closed, as the engine reaches normal operating speed, and fuel continues to be fed through the normal feed line, on which the feed control is located.

Notwithstanding these measures, and especially the addition of special additives to the fuel (which increases its cost), there are problems during the transient phases of ignition and also of shut-down of the engine due to the low flammability of the fuel used. In particular, the main drawbacks are found in the accumulation of drops of unburnt fuel in the combustion chamber both during start-up and shut-down. This unburnt fuel is a source of pollution and of damage to the turbine and also causes an increase in hourly consumption of the plant.

GB-A-719,996 discloses a method and a turbine engine according to the preamble of claims 11 and 1 respectively. In GB-A-719,996 a dual liquid fuel turbine unit is disclosed, including two fuel tanks and a turbine engine. A diesel fuel and a heavier Bunker-C oil are contained in the two fuel tanks. During start-up the turbine is fed with the diesel fuel, while the Bunker-C oil is heated until it becomes sufficiently fluid to feed the turbine engine. During steady operation the turbine is fed with the heavy Bunker-C oil, unless the heavy fuel feeding system breaks down. In such an emergency event, the diesel fuel feed is re-started.

US-A-4,833,878 discloses a dual gas fuel combustion system for a gas turbine, using gas fuels having different calorific values.

### Objects and Summary of the Invention

The object of the present invention is to provide a gas turbine engine unit that overcomes or reduces the drawbacks mentioned hereinbefore both during start-up and shut-down.

This object is achieved with a turbine engine unit according to claim 1 and with a method according to claim 11.

Essentially, according to the invention, a gas turbine engine system is provided with an auxiliary tank for a second fuel, with an auxiliary feed pipe from the auxiliary tank to the combustion chamber of the turbine. The second fuel, which is a highly flammable fuel, for example gasoline, is fed to the turbine during the start-up transients and during the shut-down transients.

To feed the second fuel to the turbine, by means of suitable atomizing nozzles, in a particularly advantageous embodiment of the invention an injection pump is provided associated with the auxiliary tank for injection of the second fuel.

Advantageously, the first feed pipe, which feeds the first fuel or main fuel with low flammability, and the second feed pipe, which feeds the second fuel or auxiliary fuel with high flammability, may be positioned in a functionally parallel way.

With these measures, during the ignition transient the turbine is initially fed only with highly flammable fuel, such as gasoline. Until a certain condition is reached, typically a sufficiently high percentage of the normal operating speed, the highly inflammable fuel or both fuels are fed. Only after reaching the pre-set condition, for example a percentage of the normal operating speed, feed of the second fuel is cut off and the turbine is fed traditionally.

The high flammability of the second fuel prevents all the typical drawbacks of the ignition transients and makes it unnecessary to add additives to the first fuel, namely the fuel that is used at normal operating speed to feed the turbine.

Preferably, the fuel feed control system also controls injection of the second fuel during the transient shut-down phase. Typically, the control system may be programmed to perform simultaneous feed, according to percentages depending on the number of revolutions of the engine, both of the first fuel and of the second fuel for a part of the transient during the engine shut-down phase. The control system is preferably programmed to feed the turbine engine only with the second highly flammable fuel for a period of time before complete shut-down. This prevents the drawbacks that occur during the shut-down transients in traditional units fed only by liquid fuels with low flammability.

According to a different aspect, the invention relates to a method for feeding a gas turbine engine comprising at least a combustion chamber, which at normal operating speed is fed with a first liquid fuel, characterized in that at least during a transient ignition period, said turbine is fed at least with a second more flammable liquid fuel than said first fuel. Preferably, the second fuel is also fed in the transient shut-down phases.

According to a possible embodiment of the method according to the invention, the following phases are envisaged:
- igniting the turbine by feeding the second liquid fuel (with high flammability) to the combustion chamber of the turbine and starting rotation of the turbine;
- after start-up of turbine rotation, starting to feed the first liquid fuel to said combustion chamber, said first fuel being less flammable than said second fuel;
- upon reaching a pre-set condition (for example upon reaching a certain rotation speed, typically 30% of the normal operating speed), stopping feed of the second fuel and continuing to feed the turbine with the first fuel only.

Alternatively, although less advantageously, feed of the second fuel may be cut off when feed of the first fuel begins.

In a particularly advantageous embodiment of the invention, the turbine is fed with the second more flammable fuel even during the shut-down transient and feed of the first fuel is cut off before the turbine shuts down.

According to a practical embodiment of the invention, to shut down the turbine the following phases are performed:
- the speed of the turbine is reduced decreasing feed of the first fuel;
- upon reaching a predetermined operating condition, feed of the second fuel begins;
- feed of the second fuel is cut off after a pre-set time.

Preferably, after feed of the second fuel begins, feed of the first fuel is cut off, preferably with a gradual reduction in flow rate, before shutting down the turbine. After this the turbine continues to rotate for example for a pre-set time, feeding it only with the highly flammable fuel. With this final phase all residue of the less flammable fuel is cleaned out before the turbine stops.

Further advantageous characteristics and embodiments of the invention are indicated in the appended claims.

### Brief Description of the Drawings

The invention shall now be better understood by following the description and accompanying drawing, which shows a non-limiting practical embodiment of the invention. More specifically, in the drawing:
Figure 1 shows a block diagram of the engine unit; and
Figure 2 shows a diagram of the auxiliary tank and of the injection pump of the second fuel.

### Detailed Description of the Preferred Embodiment of the Invention

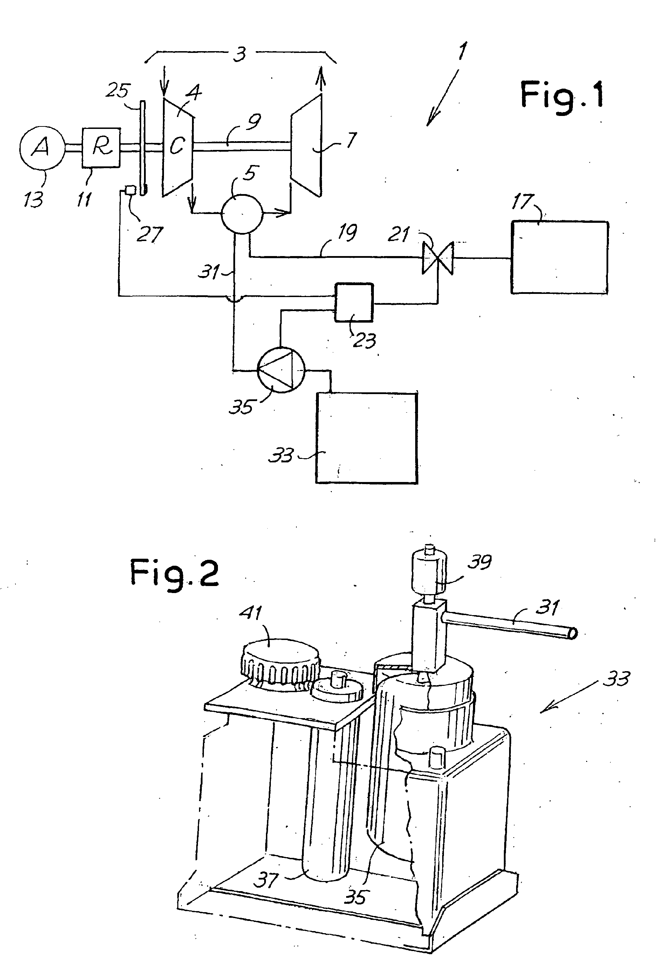

Figure 1 shows a diagram of an engine unit with gas turbine to produce electrical power. The unit, indicated as a whole with 1, comprises a turbine engine 3, composed of a compressor 4, a combustion chamber 5 and a turbine 7. The number 9 indicates the mechanical shaft of the engine 3, which, by means of a reducer 11, rotates the alternator 13.

The number 17 indicates a main tank of a first fuel, typically diesel oil, with relatively low flammability. The first fuel is fed to the engine unit 3 by means of a feed line 19, disposed on which are means to regulate the fuel flow, shown schematically by a valve 21. The flow rate of the fuel from the tank 17 to the combustion chamber 5 is regulated by a suitably programmed regulation system 23. It may be interfaced with a system to detect the rotation speed of the turbine engine, shown schematically in the example in Figure 1 by a disk 25, keyed onto the shaft 9 and by a sensor 27 that detects the rotation speed.

Functionally parallel to the line 19, the combustion chamber 5 is fed by an auxiliary line 31, connected to an auxiliary tank 33 of a second liquid fuel, more flammable than the first fuel contained in the tank 17, for example gasoline. An injection pump 35, controlled by the control system 23, is located on the line 31.

The unit composed of the tank 33, the line 31 and the injection pump 35 may be produced as shown in Figure 2, where the tank 33 is shown partially open. The injection pump 35 with its electric motor (not shown) is housed in the tank 33. The pump may be a high pressure pump, typically 6 bar or more. The number 37 indicates a detector of the level of the tank 33 and the number 39 a pressure switch to detect the injection pressure of the second fuel. The number 41 indicates a cap for filling the tank 33.

The system described above operates as follows. During ignition, feed of the first fuel to the tank 17 is intercepted. Start-up of the turbine occurs by feeding only the second fuel, with high flammability, from the tank 33. When the turbine has started to rotate, and has for example reached a specific number of revolutions, feed of the first fuel begins. The control system 23 gradually increases the flow rate of the first fuel, until reaching for example 30% of the normal operating speed of the engine (or any other suitable condition of engine operation). At this point feed of the second fuel is cut off gradually or suddenly and the normal operating speed is reached and maintained by acting on feed of the first fuel from the tank 17.

With this procedure all problems related to cold start-up of the turbine are prevented.

When the turbine engine is to be switched off, the control system 23 gradually reduces the flow rate of the first fuel from the tank 17 along the feed line 19. When the engine has reached 30% of the normal operating speed (or any other suitable condition), feed of the second fuel begins from the auxiliary tank 33 by means of the injection pump 35. The flow rate of the first fuel is then reduced more or less gradually to zero, with consequent reduction in the rotation speed of the turbine. Before cutting off feed of the second fuel, with high flammability, from the tank 33, the turbine is made to operate for a certain time, even only a few seconds, feeding it with the second fuel only, to eliminate all residue of the low flammability fuel coming from the tank 17 from the combustion chamber. Finally, by switching off the injection pump 35 the turbine stops.

In this way it is possible to eliminate problems typical of the shut-down transients, such as the production of unburnt fuel and accumulation of drops of fuel in the combustion chamber and on the vanes of the turbine.

## Claims

1. An engine unit, comprising:
- a gas turbine engine (3);
- a main tank (17) of a first liquid fuel;
- a main feed pipe (19) of the first liquid fuel from said main tank to a combustion chamber (5) of the turbine (7);
- a fuel feed control system (23);
- an auxiliary tank (33) of a second liquid fuel, said second liquid fuel being more flammable than the first fuel;
- an auxiliary feed pipe (31) from said auxiliary tank to the combustion chamber of the turbine,
wherein said control system is programmed to feed said second fuel to said turbine during the start-up transients of the turbine engine;
**characterized in that** said control system is programmed to feed said second fuel to the turbine even during the shut-down transients.

2. A unit according to claim 1, **characterized in that** said control system is programmed such that during said shut-down transient the feed of said first fuel is cut off before the turbine stops.

3. A unit as claimed in claim 1 or 2, **characterized in that** it comprises an injection pump (35) associated with said auxiliary tank (33) for injection of the second fuel.

4. A unit as claimed in claim 1 or 2 or 3, **characterized in that** an atomizing nozzle to atomize the fuel in the combustion chamber of the turbine is associated with said auxiliary pipe (31) for fuel feed.

5. A unit as claimed in one or more of the previous claims, **characterized in that** said main feed pipe (19) and said secondary feed pipe (31) are disposed in a functionally parallel way.

6. A unit as claimed in one or more of the previous claims, **characterized in that** said system to control fuel feed is programmed to control simultaneous injection, according to percentages depending on the number of revolutions of the engine, both of said first fuel and of said second fuel for a transient corresponding to the start-up phase of the turbine engine.

7. A unit as claimed in one or more of the previous claims, **characterized in that** said system to control fuel feed is programmed to control simultaneous injection, according to percentages depending on the number of revolutions of the engine, both of said first fuel and of said second fuel for a shut-down transient of said turbine engine.

8. A unit as claimed in one or more of the previous claims, **characterized in that** said system to control fuel feed is programmed to control injection into the combustion chamber of said first fuel only, fed from said main tank, during normal operating speed of said engine.

9. A unit as claimed in one or more of the previous claims, **characterized in that** said start-up transient coincides with the period elapsing between ignition of the turbine engine until reaching 30% of the revolutions of the engine at normal operating speed.

10. A unit as claimed one or more of the previous claims, **characterized in that** said shut-down transient coincides with the period elapsing between operation of the engine at 30% of the number of revolutions of normal operating speed and shut-down.

11. A method for feeding a gas turbine engine comprising at least a combustion chamber, wherein at normal operating conditions said turbine is fed with a first liquid fuel, and at least during a transient ignition period said turbine is fed at least with a second liquid fuel which is more flammable than said first fuel, **characterized in that** during at least part of a shut-down transient said turbine is fed with said second more flammable fuel.

12. Method according to claim 11, **characterized in that** during said shut-down transient feed of the first fuel is cut off before the turbine stops.

13. Method as claimed in claim 11 or 12, **characterized by** gradually reducing feed of the second fuel and gradually increasing feed of the first fuel until the turbine is fed only with said first fuel during said transient ignition period.

14. Method as claimed in claim 11 or 12, **characterized by** the phases of:
- igniting the turbine feeding the second liquid fuel to said combustion chamber of the turbine and starting rotation of the turbine;
- after start-up of turbine rotation, starting to feed the first liquid fuel to said combustion chamber, said first fuel being less flammable than said second fuel;
- upon reaching a pre-set condition, stopping feed of the second fuel and continuing to feed the turbine with the first fuel.

15. Method as claimed in one or more of the claims from 11 to 14, **characterized in that** feed of said second fuel ceases when the rotation speed of said turbine has reached a pre-set value.

16. Method as claimed in claim 15, **characterized in that** feed of the second fuel ceases when the turbine has reached a rotation speed equal to at least 30% of the normal operating speed.

17. Method as claimed in one or more of the claims from 11 to 15 **characterized in that** feed of the second fuel is cut off when feed of the first fuel begins.

18. Method as claimed in one or more of claims 10 to 17, **characterized in that** to shut down the turbine the following phases are performed:
- the speed of the turbine is reduced decreasing feed of said first fuel;
- upon reaching a predetermined operating condition, feed of the second fuel begins;
- feed of the second fuel is cut off after a pre-set time, feed of the first fuel having previously ceased.

19. Method as claimed in claim 18, **characterized in that** after feed of the second fuel begins, feed of the first fuel is gradually reduced and then cut off, before the turbine stops.

20. Method as claimed in one or more of claims 10 to 17, **characterized in that** during said shut-down transient, feed of the second fuel begins when the turbine has reached a rotation speed in the range of 30% of the normal operating speed.

## Patentansprüche

1. Motoreinheit mit:
- einem Gasturbinenmotor (3);
- einem Haupttank (17) mit einem ersten flüssigen Kraftstoff;
- einer Zuführleitung (19) für den ersten flüssigen Kraftstoff von dem Haupttank zu einer Verbrennungskammer (5) der Turbine (7);
- einem Kraftstoffversorgungssteuersystem (23);
- einem Hilfstank (33) für einen zweiten flüssigen Kraftstoff, wobei der zweite flüssige Kraftstoff leichter brennbar als der erste Kraftstoff ist;
- einer Hilfszuführleitung (31) von dem Hilfstank zu der Verbrennungskammer der . Turbine;
wobei das Steuersystem so programmiert ist, dass es während des Inbetriebnahme- übergangs des Turbinenmotors den zweiten Kraftstoff zur Turbine leitet;
**dadurch gekennzeichnet , dass** das Steuersystem so programmiert ist, dass es den zweiten Kraftstoff sogar während des Abschaltübergangs zur Turbine leitet.

2. Einheit nach Anspruch 1, **dadurch gekennzeichnet , dass** das Steuersystem so programmiert ist, dass während des Abschaltübergängs die Zufuhr des ersten Kraftstoffes unterbrochen wird, bevor die Turbine stoppt.

3. Einheit nach Anspruch 1 oder 2, **dadurch gekennzeichnet , dass** sie eine Injektionspumpe (35) zugeordnet zu dem Hilfstank (33) für das Einspritzen des zweiten Kraftstoffes aufweist.

4. Einheit nach Anspruch 1 oder 2 oder 3, **dadurch gekennzeichnet , dass** der Hilfsleitung (31) für die Kraftstoffzufuhr eine Zerstäuberdüse zugeordnet ist, um den Kraftstoff in der Verbrennungskammer der Turbine zu zerstäuben.

5. Einheit nach einem oder mehreren der vorstehenden Ansprüche, **dadurch gekennzeichnet, dass** die Hauptzuführleitung (19) und die zweite Zuführleitung (31) auf einem funktional parallelen Weg angeordnet sind.

6. Einheit nach einem oder mehreren der vorstehenden Ansprüche, **dadurch gekennzeichnet, dass** das System zur Steuerung der Kraftstoffzufuhr so programmiert ist, dass gemäß den Prozentsätzen in Abhängigkeit von der Anzahl der Umdrehungen des Motors die simultane Injektion sowohl des ersten Kraftstoffes als auch des zweiten Kraftstoffes für einen Übergang entsprechend der Inbetriebnahmephase des Turbinenmotors gesteuert wird.

7. Einheit nach einem oder mehreren der vorstehenden Ansprüche, **dadurch gekennzeichnet, dass** das System zur Steuerung der Kraftstoffzufuhr so programmiert ist, dass gemäß den Prozentsätzen in Abhängigkeit von der Anzahl der Umdrehungen des Motors die simultane Injektion sowohl des ersten Kraftstoffes als auch des zweiten Kraftstoffes für einen Abschaltübergang des Turbinenmotors gesteuert wird.

8. Einheit nach einem oder mehreren der vorstehenden Ansprüche, **dadurch gekennzeichnet, dass** das System zur Steuerung der Kraftstoffzufuhr so programmiert ist, dass während der normalen Betriebsgeschwindigkeit des Motors nur die Injektion des ersten Kraftstoffes, der von dem Haupttank zugeführt wird, in die Verbrennungskammer gesteuert wird.

9. Einheit nach einem oder mehreren der vorstehenden Ansprüche, **dadurch gekennzeichnet, dass** der Inbetriebnahmeübergang mit der Zeitspanne übereinstimmt, die zwischen Zünden des Turbinenmotors bis zum Erreichen von 30% der Umdrehungen des Motors bei normaler Betriebsgeschwindigkeit, abläuft.

10. Einheit nach einem oder mehreren der vorstehenden Ansprüche, **dadurch gekennzeichnet , dass** der Abschaltübergang mit der Zeitspanne übereinstimmt, die zwischen dem Betrieb des Motors bei 30% der Anzahl der Umdrehungen der normalen Betriebsgeschwindigkeit bis zum Abschalten abläuft.

11. Verfahren zum Versorgen eines Gasturbinenmotors mit wenigstens einer Verbrennungskammer, wobei bei normalen Betriebsbedingungen die Turbine mit einem ersten flüssigen Kraftstoff gespeist wird und wenigstens während einer Übergangszündperiode die Turbine mit wenigstens einem zweiten flüssigen Kraftstoff, der leichter brennbar als der erste Kraftstoff gespeist wird, **dadurch gekennzeichnet , dass** während wenigstens einem Teil des Abschaltübergangs die Turbine mit dem zweiten, leichter brennbaren Kraftstoff gespeist wird.

12. Verfahren nach Anspruch 11, **dadurch gekennzeichnet , dass** während des Abschaltübergangs die Zufuhr des ersten Kraftstoffes vor dem Stopp der Turbine unterbrochen wird.

13. Verfahren nach Anspruch 11 oder 12, **gekennzeichnet durch** die graduelle Reduzierung der Zufuhr des zweiten Kraftstoffes und graduelle Erhöhung der Zufuhr des ersten Kraftstoffes während der Übergangszündperiode, bis die Turbine nur mit dem ersten Kraftstoff gespeist wird.

14. Verfahren nach Anspruch 11 oder 12, **gekennzeichnet** t durch die Phasen:
- Zünden der Turbine unter Zufuhr des zweiten flüssigen Kraftstoffes zu der Verbrennungskammer der Turbine und Starten der Rotation der Turbine;
- nach der Inbetriebnahme der Turbinenrotation Starten der Zufuhr des ersten flüssigen Kraftstoffes zu der Verbrennungskammer, wobei der erste Kraftstoff weniger leicht brennbar als der zweite Kraftstoff ist;
- bei Erreichen einer vorab eingestellten Bedingung Stoppen der Zufuhr des zweiten Kraftstoffes und Fortsetzen der Zufuhr des ersten Kraftstoffes zu der Turbine.

15. Verfahren nach einem oder mehreren der Ansprüche 11 bis 14, **dadurch gekennzeichnet, dass** die Zufuhr des zweiten Kraftstoffes eingestellt wird, wenn die Rotationsgeschwindigkeit der Turbine einen vorab eingestellten Wert erreicht hat.

16. Verfahren nach Anspruch 15, **dadurch gekennzeichnet , dass** die Zufuhr des zweiten Kraftstoffes eingestellt wird, wenn die Turbine eine Rotationsgeschwindigkeit gleich wenigstens 30% der normalen Betriebsgeschwindigkeit erreicht hat.

17. Verfahren nach einem oder mehreren der Ansprüche 11 bis 15, **dadurch gekennzeichnet , dass** die Zufuhr des zweiten Kraftstoffes unterbrochen wird, wenn die Zufuhr des ersten Kraftstoffes beginnt.

18. Verfahren nach einem oder mehreren der Ansprüche 10 bis 17, **dadurch gekennzeichnet, dass** zum Abschalten der Turbine die folgenden Phasen durchgeführt werden:
- Reduzieren der Geschwindigkeit der Turbine durch Vermindern der Zufuhr des ersten Kraftstoffes;
- bei Erreichen einer vorbestimmten Betriebsbedingung beginnt die Zufuhr des zweiten Kraftstoffes;
- Zufuhr des zweiten Kraftstoffes wird nach einer vorab eingestellten Zeit unterbrochen, die Zufuhr des ersten Kraftstoffes ist zuvor eingestellt worden.

19. Verfahren nach Anspruch 18, **dadurch gekennzeichnet , dass** nachdem die Zufuhr des zweiten Kraftstoffes beginnt die Zufuhr des ersten Kraftstoffes graduell reduziert wird und dann unterbrochen wird, bevor die Turbine stoppt.

20. Verfahren nach einem oder mehreren der Ansprüche 10 bis 17, **dadurch gekennzeichnet , dass** während des Abschaltübergangs die Zufuhr des zweiten Kraftstoffes beginnt, wenn die Turbine eine Rotationsgeschwindigkeit im Bereich von 30% der normalen Betriebsgeschwindigkeit erreicht hat.

## Revendications

1. Unité de moteur comprenant :
- un moteur à turbine à gaz (3) ;
- un réservoir principal (17) d'un premier carburant liquide ;
- une conduite d'alimentation principale (19) du premier carburant liquide à partir dudit réservoir principal vers une chambre de combustion (5) de la turbine (7) ;
- un système de commande d'alimentation de carburant (23) ;
- un réservoir auxiliaire (33) d'un second carburant liquide, ledit carburant liquide étant plus inflammable que le premier carburant ;
- une conduite d'alimentation auxiliaire (31) à partir dudit réservoir auxiliaire vers la chambre de combustion de la turbine,
dans laquelle ledit système de commande est programmé pour alimenter ledit second carburant vers ladite turbine pendant les périodes transitoires de démarrage du moteur à turbine ;
**caractérisée en ce que** ledit système de commande est programmé pour alimenter ledit second carburant à la turbine même pendant les périodes transitoires d'arrêt.

2. Unité selon la revendication 1, **caractérisée en ce que** ledit système de commande est programmé de telle sorte que pendant ladite période transitoire d'arrêt, l'alimentation dudit premier carburant est coupée avant que la turbine ne s'arrête.

3. Unité selon la revendication 1 ou 2,
**caractérisée en ce qu'**elle comprend une pompe à injection (35) associée audit réservoir auxiliaire (33) pour l'injection du second carburant .

4. Unité selon la revendication 1 ou 2 ou 3, **caractérisée en ce qu'**une tuyère d'atomisation pour vaporiser le carburant dans la chambre de combustion de la turbine est associée à ladite conduite auxiliaire (31) pour l'alimentation de carburant.

5. Unité selon l'une ou plusieurs des revendications précédentes, **caractérisée en ce que** ladite conduite d'alimentation principale (19) et ladite conduite d'alimentation secondaire (31) sont disposées d'une manière fonctionnellement parallèle.

6. Unité selon une ou plusieurs des revendications précédentes, **caractérisée en ce que** ledit système pour commander l'alimentation de carburant est programmé pour commander l'injection simultanée selon des pourcentages qui dépendent du nombre de tours du moteur, à la fois dudit premier carburant et dudit second carburant pour une période transitoire correspondant à la phase de démarrage du moteur à turbine.

7. Unité selon une ou plusieurs des revendications précédentes, **caractérisée en ce que** ledit système pour commander l'alimentation de carburant est programmé pour commander l'injection simultanée selon des pourcentages qui dépendent du nombre de tours du moteur, à la fois dudit premier carburant et dudit second carburant pour une période transitoire d'arrêt dudit moteur à turbine.

8. Unité selon une ou plusieurs des revendications précédentes, **caractérisée en ce que** ledit système pour commander l'alimentation de carburant est programmé pour commander l'injection dans la chambre de combustion dudit premier carburant seulement, alimenté à partir dudit réservoir principal, pendant une vitesse de fonctionnement normale dudit moteur.

9. Unité selon une ou plusieurs des revendications précédentes, **caractérisée en ce que** ladite période transitoire de démarrage coïncide avec la période s'écoulant entre l'allumage du moteur à turbine jusqu'à ce qu'il atteigne 30 % de tours du moteur à vitesse de fonctionnement normale.

10. Unité selon une ou plusieurs des revendications précédentes, **caractérisée en ce que** ladite période transitoire d'arrêt coïncide avec la période s'écoulant entre le fonctionnement du moteur à 30 % du nombre de tours d'une vitesse de fonctionnement normale et l'arrêt.

11. Procédé pour l'alimentation d'un moteur à turbine à gaz comprenant au moins une chambre à combustion, dans laquelle, dans des conditions de fonctionnement normales, ladite turbine est alimentée avec un premier carburant liquide et au moins pendant une période d'allumage transitoire, ladite turbine est alimentée au moins par un second carburant liquide qui est plus inflammable que ledit premier carburant, **caractérisé en ce que** pendant au moins une partie d'une période transitoire d'arrêt, ladite turbine est alimentée par ledit second carburant plus inflammable.

12. Procédé selon la revendication 11, **caractérisé en ce que** pendant ladite période transitoire d'arrêt, l'alimentation du premier carburant est coupée avant que la turbine ne s'arrête.

13. Procédé selon la revendication 11 ou 12, **caractérisé par** une réduction progressive de l'alimentation du second carburant et une augmentation progressive de l'alimentation du premier carburant jusqu'à ce que la turbine ne soit alimentée que par ledit premier carburant pendant ladite période d'allumage transitoire.

14. Procédé selon la revendication 11 ou 12, **caractérisé par** les phases de :
- allumage de la turbine alimentant le second carburant liquide vers la chambre de combustion de la turbine et démarrage de la rotation de la turbine ;
- après démarrage de la rotation de la turbine, démarrage de l'alimentation du premier carburant liquide vers ladite chambre à combustion, ledit premier carburant étant moins inflammable que ledit second carburant ; dès qu'une condition préétablie est atteinte, arrêt de l'alimentation du second carburant et poursuite de l'alimentation de la turbine avec le premier carburant.

15. Procédé selon l'une ou plusieurs des revendications de 11 à 14, **caractérisé en ce que** l'alimentation dudit second carburant cesse lorsque la vitesse de rotation de ladite turbine.a atteint une valeur préétablie.

16. Procédé selon la revendication 15, **caractérisé en ce que** l'alimentation du second carburant cesse lorsque la turbine a atteint une vitesse de rotation égale à au moins 30 % de la vitesse de fonctionnement normale.

17. Procédé selon une ou plusieurs des revendications de 11 à 15, **caractérisé en ce que** l'alimentation du second carburant est coupée lorsque l'alimentation du premier carburant commence.

18. Procédé selon une ou plusieurs des revendications 10 à 17, **caractérisé en ce que** pour arrêter la turbine, on effectue les phases suivantes :
- la vitesse de la turbine est réduite en diminuant l'alimentation dudit premier carburant ;
- dès qu'une condition de fonctionnement prédéterminée est atteinte, l'alimentation du second carburant commence ;
- l'alimentation du second carburant est coupée après un temps préétabli, l'alimentation du premier carburant ayant préalablement cessé.

19. Procédé selon la revendication 18, **caractérisé en ce qu'**après avoir commencé l'alimentation du second carburant, l'alimentation du premier carburant est progressivement réduite et ensuite coupée avant que la turbine ne s'arrête.

20. Procédé selon une ou plusieurs des revendications 10 à 17, **caractérisé en ce que** pendant ladite période transitoire d'arrêt, commence l'alimentation du second carburant lorsque la turbine a atteint une vitesse de rotation dans la plage de 30 % de la vitesse de fonctionnement normale.
